(19) Europäisches Patentamt
European Patent Office
Office européen des brevets

(11) **EP 1 887 744 B1**

(12) **EUROPEAN PATENT SPECIFICATION**

(45) Date of publication and mention of the grant of the patent:
**17.04.2013 Bulletin 2013/16**

(51) Int Cl.:
*H04L 12/70* (2013.01)       *H04L 12/24* (2006.01)

(21) Application number: **07015351.5**

(22) Date of filing: **06.08.2007**

(54) **Method for finding the most prominent group of vertices in complex data communication networks**

Verfahren zur Ermittlung der am weitesten herausragenden Spitzen in komplexen Kommunikations-Datennetzwerken

Procédé pour trouver le groupe le plus important de sommets dans des réseaux complexes de communication de données

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **10.08.2006 IL 17743006**
**16.04.2007 IL 18257907**

(43) Date of publication of application:
**13.02.2008 Bulletin 2008/07**

(73) Proprietor: **Deutsche Telekom AG**
**53113 Bonn (DE)**

(72) Inventors:
• **Puzis, Rami**
**Ashdod 77477 (IL)**
• **Elovici, Yuval**
**Moshav Arugot 79864 (IL)**
• **Dolev, Shlomo**
**Omer 84965 (IL)**

(74) Representative: **Maiwald Patentanwalts GmbH**
**Elisenhof**
**Elisenstrasse 3**
**80335 München (DE)**

(56) References cited:
**US-A1- 2004 267 584     US-A1- 2006 075 335**

• **P.A. GLOOR, R. LAUBACHER, S.B.C. DYNES AND Y. ZHAO: "Visualization of communication patterns in collaborative innovation networks" CIKM'03: PROCEEDINGS OF THE TWELFTH INTERNATIONAL CONFERENCE ON INFORMATION AND KNOWLEDGE MANAGEMENT, 2 November 2003 (2003-11-02), - 8 November 2003 (2003-11-08) pages 56-60, XP002606841 DOI: 10.1145/956863.956875 ISBN: 1-58113-723-0**
• **AIR FORCE RESEARCH LABORATORY - INFORMATION DIRECTORATE: 'SCALABLE PROTECTION AGAINST DDOS AND WORM ATTACKS', [Online] 01 April 2004, XP055003775 Retrieved from the Internet: <URL:http://www.dtic.mil/cgi-bin/GetTRDoc?Location=U2&doc=GetTRDoc.pdf&AD=ADA423164> [retrieved on 2011-07-28]**

## EP 1 887 744 B1

**Description**

<u>Field of the Invention</u>

The present invention relates to the field of complex data networks. Specifically, this invention relates to the location of the most prominent group of vertices in a complex data network.

Publications and other reference materials referred to herein, including reference cited therein, are incorporated herein by reference in their entirety and are numerically referenced in the following text and respectively grouped in the appended Bibliography which immediately precedes the claims.

<u>Background of the Invention</u>

Complex networks are used in the art to study the structure and dynamics of complex systems in various disciplines [1]. Example of networks classified as complex networks are social networks [2, 3], protein interactions networks [4], and computer networks such as the Internet [5, 6]. In social networks vertices are usually individuals and edges characterize the relations between them. In computer networks, vertices might be routers connected to each other through communication lines.

Many naturally evolved complex networks are characterized by a Scale-Free (SF) structure [7, 8] and in particular the power-law distribution [5] of Connectivity Degree. Scale-free networks are characterized by having a small number of vertices with a very high degree of connectivity [9]. While power-law degree distribution is the main characteristic of scale-free networks, many networks are also characterized by power-law Betweenness distribution [10].

Identification of the most central group of vertices in a network is an important issue from both theoretical and practical points of view. For example, Ballester et al. state in [11] the importance of finding the key group in a criminal network. Borgatti elaborates in [12] on a Key Player Problem (KPP) that is strongly related to the cohesion of a network. The author defines two problems KPP-Pos and KPP-Neg. The solution of the first problem is a group maximally connected to all other vertices in a graph and the solution of the second is a group maximally disrupting the network.

The potential to control traffic flow in data networks is typically attributed in the literature to vertices with high Betweenness Centrality (BC) [13, 14, 15]. In certain applications the BC of vertices was used to define a congestion-free routing strategy [16]. Another important definition is that of Group Betweenness Centrality (GBC) which is used to compute the prominence of groups of vertices in complex networks. Everett and Borgatti [17] defined GBC as a natural extension of the Betweenness measure. Freeman [13] has defined the Group Betweenness Centralization index as a measure of homogeneity of the members' Betweenness. Hereinbelow we refer to GBC according to the definition of Everett and Borgatti.

As known in the art, many applications require the location of the most prominent group of vertices in a graph. One possible application is optimizing deployment of intrusion detection devices in a Wide Area Network (WAN). Self propagating malicious code (computer viruses and worms) pose a significant threat to Internet users. Only a portion of the users who are connected to the Internet are protected by updated anti virus tools. One way to prevent users from being infected by such threats is to clean the traffic at the level of Network Service Provider (NSP). The NSP traffic can be monitored and cleaned by Distributed Network Intrusion Detection System (DNIDS) that may be deployed on the NSP routers/links [18]. It is not practical to inspect the traffic of all the routers/links of the NSP. Theoretical models suggest protecting the most significant routers/links in order to slow down the threat propagation in the entire network [26]. Previous research has shown that NSP network infrastructure can be regarded as a complex network [6] and it has scale-free properties [5, 10]. Thus, the group of routers/links that together have the highest influence on communication in the NSP infrastructure can be located by finding the group with the highest GBC.

US 2004/0267584 A1 describes a method for modeling a complex system with specific target foci wherein each of the foci have interdependent relationships between the foci.

US 2006/0075335 A1 and P.A. Gloor, R. Laubacher, S.B.C. Dynes and Y. Zhao: "Visualiziation of communication patterns in collaborative innovation networks" CIKM '03: Proceedings of the twelfth international conference on information and knowledge management, 2 November 2003 - 08 November 2003, pages 56-60 describe a system to visualize and understand the role played by collaborative groups and individuals in a social communication network.

A trivial method for finding the group of vertices having the maximal GBC is to calculate the GBC of every possible group, and to select the group with the highest value. In large networks, such a strategy is not computationally feasible. Another trivial method for finding a group of vertices having high GBC is to incorporate vertices with maximal individual BC. However, as stated hereinbelow, this method may not produce good results.

Therefore, it would be highly desirable to provide a process by which the group of vertices with the maximal GBC is located in an efficient manner, so that the process can be used in small, as well as in large networks.

It is the object of the present invention to provide a method by which the group of vertices in a graph having the maximal GBC is located, as claimed in claim 1.

Further purposes and advantages of this invention will become apparent as the description proceeds.

## Summary of the Invention

The present invention is directed to a searching method for finding the most prominent group of vertices in a graph representing a data communication network as claimed in claim 1. Preferred embodiments are covered by the dependent claims.
All the above and other characteristics and advantages of the invention will be further understood through the following illustrative and non-limitative description of preferred embodiments thereof.

## Brief Description of Drawings

Fig. 1 illustrates an example of a search space presented by a decision tree;
Fig. 2 is a graph showing the GBC calculated for a random network;
Fig. 3 is a graph showing the GBC calculated for a scale-free network;
Fig. 4 is a graph showing the computation time for a random network;
Fig. 5 is a graph showing the computation time for a scale-free network; and
Fig. 6 is a graph showing the percent of infected/crashed computers as a function of the DNIDS deployment size.

## Detailed Description of Preferred Embodiments

In view of the disadvantages of known method described hereinabove, there is a need for an improved process by which the group with maximal GBC can be located efficiently in both small and large networks.
The optimization problem referred to in the present application is therefore to find the group of vertices in a graph representing a communication network having the maximal GBC. Analogously to [12], detailed hereinabove, this problem is referred to herein as KPP-Com. Solutions of the KPP-Com problem can be used, for example, in optimizing the deployment of Distributed Network Intrusion Detection Systems (DNIDS) in large communication networks.
For sake of clarity, below is a short description of GBC, and related terms:
As mentioned hereinabove, the present invention provides a process for locating a group of vertices that has the maximal GBC. Thus, in communication network $G=(V,E)$, having $|V|=n$ vertices and $|E|=m$ edges, the group of vertices with the maximal GBC has the maximal control over the traffic in the network. For sake of simplicity, it is assumed herein that G is a connected, unweighted and undirected graph. However, as would be understood by those familiar with the art, the process provided by the present invention is applicable to networks that have no such constraints.
It is assumed that every two vertices in the network communicate with each other through the shortest paths. It is also assumed that information sent by $s \in V$ to $t \in V$ can be inspected or modified by vertices $s, t$, or any intermediate vertex that participates in forwarding this information. The KPP-Com problem related to by the present invention focuses on finding a group of vertices $S \subseteq V$ of size $k$ that can inspect or modify most of the information flow in the network.
Shortest Path Betweenness is considered to be an accurate estimate of the information flow controlled by a vertex in communication networks that use shortest path routing [15, 16]. Therefore, primarily, the present invention relates to locating the group with maximal Betweenness.
All shortest path Betweenness measures are defined as a summation over all pairs of vertices in a graph. Let $s$ and $t$ be two vertices in a graph. Let $\sigma_{s,t}$ be the total number of different shortest paths that connect $s$ and $t$. Let $v$ be a vertex that lies on a shortest path between $s$ and $t$. The number of shortest paths from s to t that pass through $v$ is denoted by $\sigma_{s,t}(v)$. In order to determine how many different paths from s to $t$ traverse $v$, the number of shortest paths from $s$ to $v$ (denoted herein as $\sigma_{s,v}$) is multiplied by the number of shortest paths from $v$ to $t$ ($\sigma_{v,t}$).
Accordingly,

$$\sigma_{s,t}(v) = \begin{cases} \sigma_{s,v} \cdot \sigma_{v,t} & d(s,t)=d(s,v)+d(v,t) \\ 0 & otherwise \end{cases}$$

wherein $d(x,y)$ is the distance between vertices $x$ and $y$.
Betweenness Centrality (BC) of vertex $v \in V$ represents the total influence that $v$ has on communications between all possible pairs of vertices in the graph. The Betweenness Centrality of vertex $v$ is defined as:

$$BC(v) = \sum_{s,t \in V | s \neq v \neq t} \left( \frac{\sigma_{s,t}(v)}{\sigma_{s,t}} \right) \cdot \tag{1}$$

where the fraction $\dfrac{\sigma_{s,t}(v)}{\sigma_{s,t}}$ represents the influence of u on the communication between $s$ and $t$.

BC of individual vertices can be naturally extended to the Betweenness Centrality of groups of vertices [17]. Let $S \subseteq V$ be a group of vertices. $GBC(S)$ stands for the total fraction of shortest paths between all pairs of vertices that pass through at least one member of the group S. Let $\ddot{\sigma}_{s,t}(S)$ be the number of shortest paths between s and t that traverse at least one member of the group S. The Group Betweenness Centrality of group S is then:

$$GBC(S) = \sum_{s,t \in V | s \neq t} \left( \frac{\ddot{\sigma}_{s,t}(S)}{\sigma_{s,t}} \right) \tag{2}$$

In the original definition of Betweenness, shortest paths that start or end at the evaluated vertices are not included in the computation of *BC* or *GBC.* It is more convenient to think that information originating at some vertex is seen by this vertex and hence, should be considered. Hereinbelow, we include shortest paths that start or end at the evaluated vertices in computation of their Betweenness. Inclusion of the end vertices results in an addition of a constant term *2n-2.* to single vertex *BC* and |S| (2n- |S| -1) to *GBC(S).* Similar variation of BC was previously mentioned [10].

It can be proven by straightforward reduction from the Minimal Vertex Cover problem [20] that finding a group with maximal GBC is NP-hard. Any group that controls all the information flows in the network (in particular, communications of adjacent vertices) must have one vertex on every edge in the network and vise versa. One way to cope with the complexity of the KPP-Com problem is to employ a heuristic search. Alternatively, a suboptimal polynomial time process can be used when the network and group become relatively large.

During the search for the group with maximal GBC, many groups are evaluated. The process presented in [21] computes GBC of a given group of vertices. The complexity of this process is $O(k^3)$, where k is the size of the group. The process requires a preprocessing step with the complexity of $O(n^3)$, where n is the size of the network. Efficient heuristic searches decreases the number of groups that have to be evaluated, nevertheless, the number of evaluated groups is proportional to $n^k$. Thus, when searching for groups with size three or more, the time spent on preprocessing is negligible compared to the time spent on the search.

As mentioned hereinabove, the present invention in related to solving the KPP-Com problem efficiently. One aspect of the present invention relates to heuristic searches implemented for finding the most influential group of vertices in a network.

In order to avoid confusing the search space with the original input graph, the terms "nodes" and "transitions" are used herein to refer to parts of the search space, and the terms "vertices" and "edges" are used herein to refer to parts of the input graph.

Every node (denoted by C) maintains one group of vertices (denoted by *GM(C))* and a list of candidate vertices (denoted by *CL(C))* that may join the group. $CL(C)=(c_1, c_2, ...)$ is related to as an ordered list of vertices wherein the order of vertices in *CL(C)* may vary between the nodes. As will become apparent hereinbelow, the order of the vertices in *CL(C)* is important to carry out the process proposed by the present invention. This order can be calculated according to the present invention in more than one manner, as detailed hereinbelow. Once ordered, the first vertex in *CL(C)* is referred to as $\upsilon^{best}$.

The search space is treated herein as a decision tree. At every node it is decided whether $\upsilon^{best}$ is included in the most influential group. According to this decision, each node in the tree branches into two sub-trees, one containing all groups that include $\upsilon^{best}$ and the other containing all the groups that do not include $\upsilon^{best}$. It is therefore ensures that' all possible solutions can be found during the search.

Mathematically, every node in the decision tree has two children: the left child is denoted by $C^-$ and the right child is denoted by $C^+$. $GM(C^+)$ contains all the vertices of $GM(C)$ in addition to vertex $\upsilon^{best}$ whereas $GM(C^-)$ is equal to $GM(C)$, so:

$$GM(C^+) = GM(C) \cup \{v^{best}\}$$

$$GM(C^-) = GM(C)$$

The candidates' lists of both children contain all the vertices from the candidates list of their father excluding $v^{best}$, therefore:

$$CL(C^+) = CL(C^-) = CL(C) \setminus \{v^{best}\}$$

As would be understood by those familiar with the art, the root node of the tree represents an empty group of vertices. Its candidates' list contains all the vertices in the input graph. Every child of the root holds a candidates list that is missing one vertex and a group that includes one vertex, or none. All nodes of the second level hold a candidates' list that is missing two vertices and a group that includes zero, one, or two vertices, etc.

In the present invention, the size of the group of vertices searched for is predefined, and denoted herein to be of size $k$ (i.e., the group contains $k$ vertices). Accordingly, only groups defined by $|GM(C)|=k$ are possible solutions. Therefore, in order to minimize the amount of necessary computations, all sub-trees that do not contain a possible solution are excluded from the search space. These can be either sub-trees rooted at nodes with $|GM(C)| > k$, or sub-trees rooted at nodes with $|CL(C)| < k - |GM(C)|$. By excluding sub-trees that do not contain possible solutions the depth of the tree is limited to the size of the input graph.

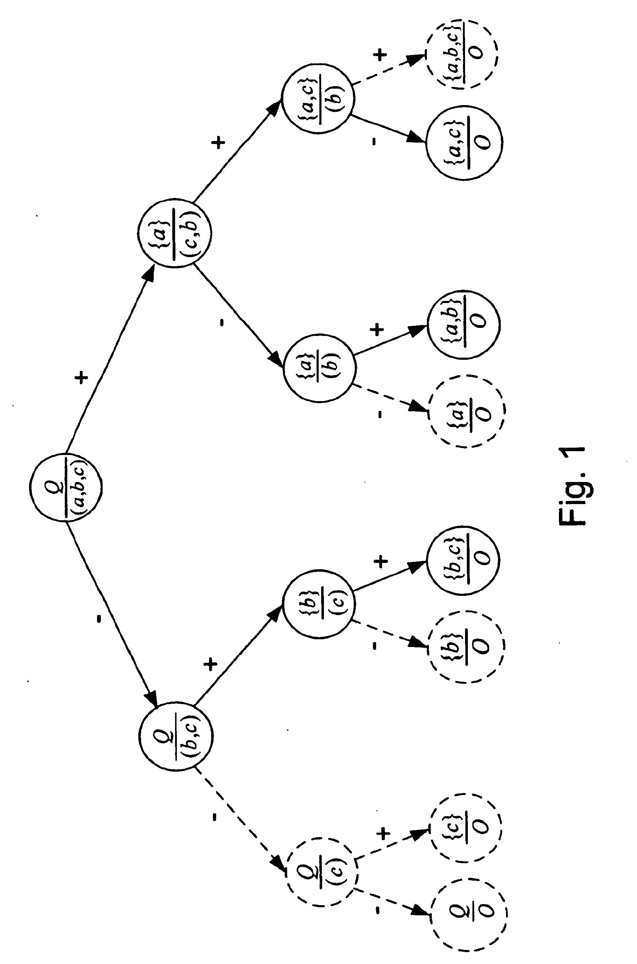

An example of a decision tree, representing the search space of an input graph containing vertices $\alpha$, $b$, and $c$ .(i.e., $n=3$), wherein the group size searched for is $k=2$, is illustrated in Figure 1. The search starts at the root node R, whose candidates list is $(a,b,c)$ and $\alpha = v^{best}$. All groups where $\alpha$ is a member are positioned to the right of the original node (following the "+" transition). The "right child" $(R^+)$ maintains the group $\{\alpha\}$, as well as a candidates list that includes all vertices of the original graph, excluding the vertex $\alpha$. It is noted that the order of vertices in $CL(R^+)$ is possibly different from the order of vertices in $CL(R)$. In a similar manner, all groups where a is not a member are positioned to the left of the original node (following the "-" transition from the root node). The "left child" $(R^-)$ found in Fig. 1 maintains an empty group and candidates list that is identical to the candidates list of $R^+$.

The decision tree described hereinabove must be searched for the group of vertices having the maximal GBC. According to the present invention, the Depth First Branch and Bound (DFBnB) process [22] is used to search the tree for the group with maximal GBC. DFBnB is known to be effective when the depth of the search tree is known, and therefore, is appropriate for the process of the present invention, as described hereinabove. According to the present invention, the search begins with a bound equal to zero. During the search, the bound is equal to the maximal GBC found so far.

In contrast to the traditional search that is aimed at finding the node with minimal cost, the present invention implements a utility based approach. The utility of the node C is defined as $g(C)=GBC(GM(C))$. Heuristic function $h(C)$ estimates the maximal utility that can be gained by exploring the sub-tree rooted at $C$. $f(C)=g(C)+h(C)$ is a function that estimates the maximal utility of nodes in C's sub-tree.

The utility of the root node R is equal to zero since $GM(R)=\emptyset$. $h(R)$ is the upper bound on the optimal solution. While searching down the tree, g(C) grows and $h(C)$ decreases. When a possible solution is found, $h(C)$ is equal to zero and $f(C)$ is equal to $GBC(GM(C))$, wherein $|GM(C)| =k$.

Pruning decisions made during the search are based on the value of $f(C)$ and the maximal GBC found so far. It can be guaranteed that a heuristic search will find the optimal solution only if the function $f(C)$ is an upper bound on the maximal GBC that can be found within the sub-tree rooted at node C. If this upper bound is below the maximal GBC found so far, the sub-tree is pruned. Otherwise, the sub-tree is explored, so as to try finding a group with a higher value of GBC.

## The heuristic functions

According to the present invention, four different heuristic functions may be used in order to estimate the maximal gain in GBC that can be acquired during the exploration of the sub-tree rooted at node C. The four functions differ in their computation time and accuracy.

The first two functions, $h_1$ and $h_2$, assume that the candidates list $CL(C)$ is ordered according to individual Betweenness of its members.

*h1(C)* is defined as follows:

$$h_1(C) = BC(c_1) \cdot (k - |GM(C)|) \tag{3}$$

As can be seen in Equation 3, in $h_1(C)$ the BC of the first vertex in the candidates list is multiplied by the number of vertices that need to be added to *GM(C)* in order to construct a group of size k. This function is a very rough upper bound. $h_1$ can be computed at *O(1)* since the individual Betweenness of all vertices is calculated once prior to the search.

$h_2(C)$ is defined as follows:

$$h_2(C) = \sum_{i=1}^{k-|GM(C)|} BC(c_i) \tag{4}$$

As can be seen in Equation 4, in $h_2(C)$ Betweenness of the $k$-| *GM(C)*| vertices with maximal individual Betweenness is summed in *CL(C)*. This function is a refinement of a previous function. The computational complexity of $h_2(C)$ is *O(k)*.

The next two functions that can be used according to the present invention, $h_3(C)$ and $h_4(C)$, assume that the candidates list *CL(C)* is ordered according to contribution of the vertices to GBC of *GM(C)*.
$h_3(C)$ is defined as follows:

$$h_3(C) = BC^{GM(C)}(c_1) \cdot (k - |GM(C)|) \tag{5}$$

The function $h_3(C)$, is similar to the first function $h_1(C)$, as shown in Equation 5. However, in this case the vertex in *CL(C)* with highest contribution to the GBC of the group *GM(C)* is located rather that the vertex with the highest individual Betweenness. Since the contribution of a vertex is always smaller than its individual Betweenness, $h_3$ is a refinement of $h_1$. Furthermore, $h_3$ includes computation of the contributions. The computational complexity of $h_3$ is *O(1)* when performing the "-" transitions. When performing the "+" transitions there are two options: if |*GM(C)* |+1< √n then the computational complexity of $h_3$ is $O(k^2n)$ otherwise it is $O(n^2)$.

$h_4$ is defined as follows:

$$h_4(C) = \sum_{i=1}^{|GM(C)|} BC^{GM(C)}(c_i) \tag{6}$$

The function $h_4(C)$ is similar to $h_2$, but in this the vertices in *CL(C)* are ordered according to their contribution to the *GBC* of *GM(C)*. This function is more accurate than all the other functions, since it is a refinement of both $h_2$ and $h_3$. The computational complexity of $h_4$ is *O(k)* when performing the "-" transitions. When performing the "+" transitions there are two options: if $|GM(C)|+1 < \sqrt{n}$ then the computational complexity of $h_4$ is $O(k^2n)$ otherwise it is $O(n^2)$.

The above four heuristic functions are used according to the present invention for pruning sub-trees. If *f(C)* is below the maximal *GBC* found so far, the sub-tree rooted at C will be pruned. Otherwise the algorithm will visit the two children of C by first following the "+" transition and afterwards the "-" transition. $v^{best}$ is chosen from the candidates list *CL(C)* according to the heuristic evaluation function used. For $h_1$ and $h_2$ $v^{best}$ is a candidate with highest Betweenness centrality. For $h_3$ and $h_4$ $v^{best}$ is a candidate with highest contribution to the *GBC* of the group represented by the current node.

**Admissibility of the heuristic functions**

Hereinbelow is a proof that all of the heuristics functions described in the previous subsection are admissible. An admissible heuristic function guarantees that during the search the optimal solution will be found. Since the calculations presented herein are based on utility, it will be shown that the heuristic function f overestimates the *GBC* of any group in the sub-tree. It will be shown that $h_2(C)$ is always lower than or equal to $h_1(C)$ and that $h_4(C)$ is lower than or equal

to $h_2(C)$ and $h_3(C)$. In light of this partial order, it is enough to show that $f(C)=g(C)+h_4(C)$ overestimates the maximal GBC that can be found within the sub-tree rooted at C.

Let $\{BC(v)\}_{v \in CL(C)}$ be a sequence of Betweenness values. Let $\{BC^{GM(C)}(v)\}_{v \in CL(C)}$ be a sequence of contributions to the Group Betweenness of $GM(C)$. Let $l=k-|GM(C)|$ be the number of vertices that are still missing in the group represented by the node $C$. The contribution of a vertex to the GBC of some group is always lower than or equal to its individual Betweenness [21]. Summation of the $l$ highest contributions is lower than or equal to the summation of the $l$ highest Betweenness values of distinct vertices in $CL(C)$, thus $h_2(C) \geq h_4(C)$. $h_2$ and $h_4$ are summations of the $l$ highest elements in $\{BC(v)\}_{v \in CL(C)}$ and $\{BC^{GM(C)}(v)\}_{v \in CL(C)}$, respectively. $h_1$ and $h_3$ are $l$ times the highest element in the respective lists, therefore, $h_1(C) \geq h_2(C)$ and $h_3(C) \geq h_4(C)$

The Lemma: "$h_4$ is an admissible heuristic function" shall now be proven:

It will be proven by negation that $h_4(C)$ overestimates the maximal GBC that can be gained during exploration of the sub-tree rooted at C. Assuming that $C$ has a descendant $C'$ such that $h_4(C) < g(C')-g(C)$. Let $q=|GM(C')|-|GM(C)|$. Let $S=\{s_1,...,s_q\}$ be a subset of $CL(C)$ such that $GM(C') = GM(C) \cup S$. The joint contribution of all vertices in S to the GBC of GM(C) is smaller than or equal to the sum of their individual contributions.

$$\sum_{i=1}^{q} BC^{GM(C)}(s_i) \geq g(C') - g(C)$$

According to negation assumption and definition of $h_4$:

$$\sum_{i=1}^{q} BC^{GM(C)}(s_i) > \sum_{i=1}^{k-|GM(C)|} BC^{GM(C)}(c_i)$$

$q$ is smaller than or equal to $k-|GM(C)|$ (the number of vertices whose contribution to $GM(C)$ was summed by $h_4$). Since $h_4$ sums the highest elements in $CL(C)$ and $S \subseteq CL(C)$ the above inequality is impossible.

## Order of the vertices in CL(C)

As mentioned hereinabove, when visiting a node, beside the decision whether to prune the current sub-tree, $v^{best}$ must be determined, as well. That is, the order of the vertices in $CL(C)$ must be determined. The order of vertices in $CL(C)$ is important both for choosing $v^{best}$, as well as for computing admissible pruning heuristics. According to the present invention, two methods can be used in order to determine the ordering of vertices in $CL(C)$, thereby determining, inter alia, $v^{best}$.

The order of vertices in $CL(C)$ can be determined according to the present invention either by their individual Betweenness or by their contribution to Betweenness of $GM(C)$.

Processes presented in [23, 24, 25] compute the individual BC for all vertices in the graph with time complexity $O(mn)$. The vertices in $CL(C)$ can be sorted according to their individual BC where the first vertex is the vertex with the highest BC. The computation of BC, as well as the sorting of the vertices, needs to be performed only once for the entire search, using any of the processes presented in [23, 24, 25]. Sorting vertices by their individual BC will impose the same order on all candidate lists in the tree.

However, referring to the individual BC of the vertices is not the optimal way to order the vertices $CL(C)$. Assume that there is a vertex in $CL(C)$ with very high BC. It is also assumed that most of the traffic covered by this vertex is already covered by $GM(C)$. In such a case, it is misleading to use BC as a measure for the potential of this vertex to help the group in covering more traffic. For this reason, it is preferred to use the contribution of vertices to GBC of $GM(C)$ rather than their individual Betweenness.

Let $v \in V$ be some vertex in the graph. Let $S \subseteq V$ be a group of vertices. The contribution of the vertex $v$ to the GBC of S is denoted herein by $BC^S(v)$. Therefore:

$$BC^S(v) = GBC(S \cup \{v\}) - GBC(S).$$

The process presented in [21] is able to compute the contribution of all vertices in the graph with a time complexity of $O(kn^2)$. The time complexity of updating the contribution of all vertices in the graph when one vertex is added to the group is $O(n^2)$. The actual contribution of vertices in $CL(C)$ in such cases depends on the members of $GM(C)$. Therefore,

EP 1 887 744 B1

the contribution of vertices should be recalculated each time the search algorithm moves to the right child (thereby adding $\upsilon^{best}$ to *GM(C))*. Recalculating the contribution of vertices in *CL(C)* may change their order.

Another aspect of the present invention relates to a greedy process for locating the most influential group of vertices in a given graph. It is assumed that the first solution encountered during DFBnB is close to the optimal solution. Thus, a simple iterative process is defined, in which at every step during the search the process chooses the next best candidate and stops after choosing *k* vertices. This process is referred to herein as ItrK. The process chooses the next best candidate $v \in CL(C)$ according to its contribution to GBC of the group represented by current node C $(B^{GM(C)}(v))$. The complexity of the ItrK process is $O(n^3)$ and therefore it is significantly faster than the exponential time heuristic search described hereinabove (for all heuristic functions).

Another process known in the art for locating the most influential group of vertices in a given graph chooses *k* vertices that have the highest individual Betweenness. This process is denoted herein as TopK. *k* vertices with highest individual Betweenness are selected after a single execution of the process that computes the BC for all vertices in the graph [25, 23]. Therefore, the complexity of the TopK process is *O(mn).* The processes of the present invention shall be compared hereinbelow to the TopK process in order to evaluate both their accuracy and their efficiency.

The invention will be further illustrated with reference to the following illustrative examples, which are not intended to limit the scope of the invention in any manner.

## Example 1

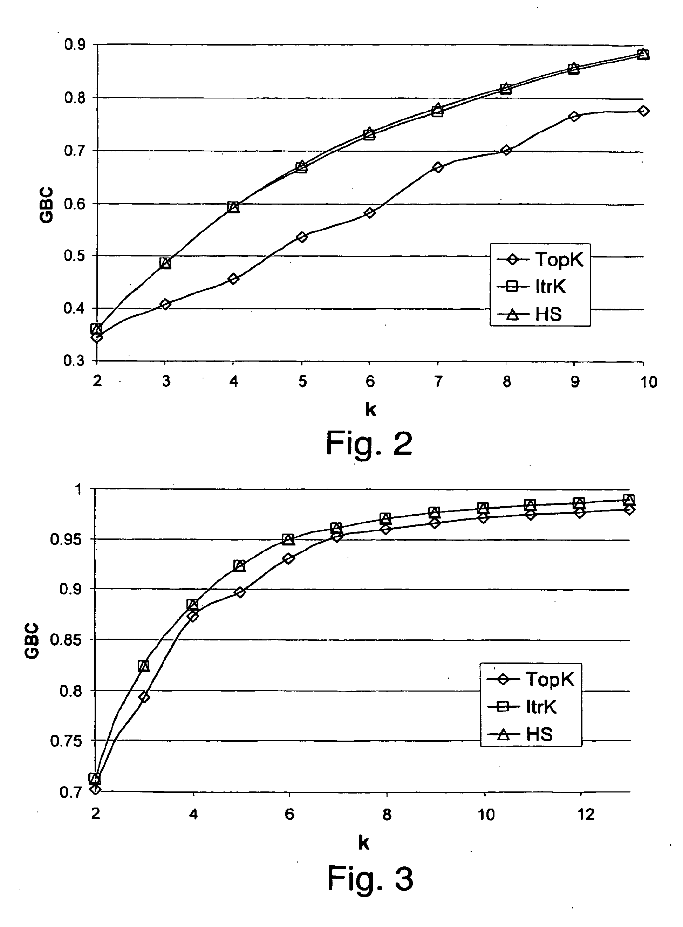

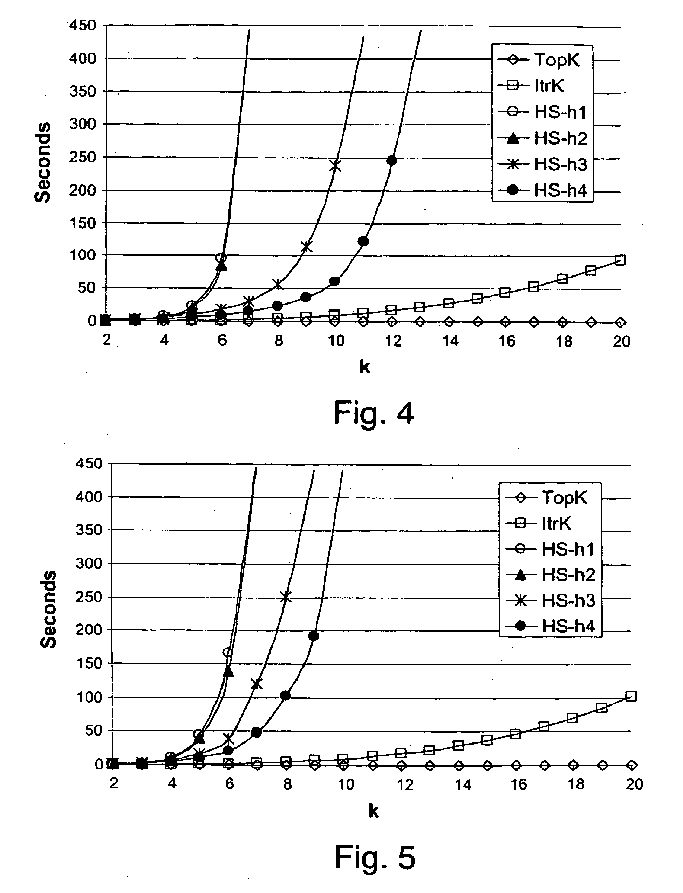

In order to evaluate the performance of the processes of the present invention they were implemented in Python (http://www.python.org/) and performed the evaluations networks with 100 vertices and 130 edges. The first goal was to compare the accuracy of the greedy processes (TopK and ItrK) with DFBnB based on the four heuristic functions detailed hereinabove. The comparison was conducted both for random (Figure 2) and for preferential-attachment networks (Figure3). The running time of various GBC maximization strategies for random and preferential-attachment networks are presented in Figures 4 and 5, respectively. The results of the evaluation experiments suggest that results of the ItrK algorithm are very close to the optimal (see Figures 2 and 3) while its computation time (see Figures 4 and 5) is low. The evaluation results show that heuristic search works faster on scale-free networks (compare the plots in Figures 4 and 5).

The computation time of the ItrK process, TopK process and the heuristic search for four heuristic functions were compared. TopK and ItrK are much faster than heuristic searches. It appears that the computation time of the heuristic search process is decreasing when a more accurate heuristic function is used, wherein $h_1$ is the least accurate among the heuristic functions, and $h_4$ is the most accurate. Furthermore, the computation time decreases even though the complexity of the heuristic function is increasing.

A summary of the GBC results and the execution time of various algorithms is shown in Table I.

**Table I**

| Network model | Process | Result (GBC) | Total time (sec.) | Visited nodes |
|---|---|---|---|---|
| Preferential-attachment | Top K | 0.904 | 0.015 | 1 |
| | ItrK | 0.941 | 1.937 | 6 |
| | HS-$h_1$ | 0.941 | 96.058 | 1520 |
| | HS-$h_2$ | 0.941 | 84.84 | 1338 |
| | HS-$h_3$ | 0.941 | 18.608 | 90 |
| | HS-$h_4$ | 0.941 | 8.891 | 42 |
| random | Top K | 0.67 | 0.016 | 1 |
| | ItrK | 0.721 | 1.922 | 6 |
| | HS-$h_1$ | 0.733 | 166.195 | 3108 |
| | HS-$h_2$ | 0.733 | 139.822 | 2606 |
| | HS-$h_3$ | 0.733 | 38.967 | 204 |
| | HS-$h_4$ | 0.733 | 20.092 | 104 |

## Example 2

The greedy processes of the present invention were implemented to find the optimal deployment of Distributed Network Intrusion Detection Systems (DNIDS) over a communications network.

As mentioned above, one way to prevent users from being infected by computer viruses, worms, and Trojan horses is to clean the traffic at the NSP level. The NSP traffic can be monitored and cleaned by DNIDS that may be deployed on the NSP routers/links [18, 19]. It is not practical to inspect the traffic of all the routers/links of the NSP. Theoretical models suggest protecting the most significant routers/links in order to slow down threat propagation in the entire network [26]. The greedy process of the present invention was implemented to locate the routers/links that together have the highest influence on communication in the NSP infrastructure.

The NSP network examined included 26 core routers, 70 edge routers, 204 customer routers, and 451 links.

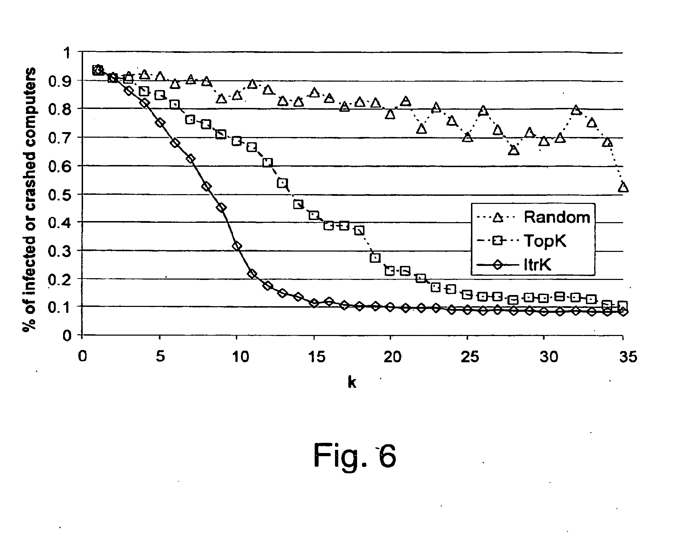

It is assumed that five local area networks are connected to each customer router. Then, the threat propagation in the NSP infrastructure was analyzed assuming that a DNIDS is monitoring the traffic of the influential group of routers/links. The analysis was performed using a network simulator that was developed for this purpose and whose main goal is to assist in finding the optimal size and the optimal location of DNIDS deployment. The analysis was repeated for various group sizes while measuring the number of infected local area networks. The simulation was repeated for deployment based on ItrK, TopK, as well as for random deployment. The simulation results (shown in Figure 6) illustrate the superiority of deployment located by the iterative greedy algorithm (ItrK).

Although embodiments of the invention have been described by way of illustration, it will be understood that the invention is defined by the scope of the claims.

## Bibliography

[1] S. H. Strogatz. Exploring complex networks. Nature, 410:268-276, March 2001.

[2] S. Wasserman and K. Faust. Social network analysis: Methods and applications. Cambridge, England: Cambridge University Press., 1994.

[3] J. Scott. Social Network Analysis: A Handbook. Sage Publications, London, 2000.

[4] P. Bork, L. J. Jensen, C. von Mering, A. K. Ramani, I. Lee, and E. M. Marcotte. Protein interaction networks from yeast to human. Curr. Opin. Struct. Biol., 14(3):292-299, June 2004.

[5] M. Faloutsos, P. Faloutsos, and C. Faloutsos. On power-law relationships of the internet topology. SIGCOMM Comput. Comm. Rev., 29(4):251-262, 1999.

[6] S.-H. Yook, H. Jeong, and A.-L. Barabasi. Modeling the internet's large-scale topology. Proceedings of the National Academy of Science, 99:13382-13386, Oct 2002.

[7] A.-L. Barabasi and R. Albert. Emergence of scaling in random networks. Science, 286:509-512, 1999.

[8] A.-L. Barabasi, R. Albert, and H. Jeong. Scale-free characteristics of random networks: the topology of the world-wide web. Physica A, 281:69-77, 2000.

[9] B. Bollobas and O. Riordan. Robustness and vulnerability of scale-free random graphs. Internet Mathematics, 1:1-35, 2003.

[10] M. Barthélemy. Betweenness centrality in large complex networks. The European Physical Journal B - Condensed Matter, 38(2):163 - 168, March 2004.

[11] C. Ballester, A. CalvA -Armengol, and Y. Zenou. Who's who in networks. wanted: The key player. CEPR Discussion Papers 5329, C.E.P.R. Discussion Papers, October 2005. available at http://ideas.repec.org/p/cpr/ceprdp/5329.html.

[12] Stephen P. Borgatti. Identifying sets of key players in a social network. Comput. Math. Organ. Theory, 12(1): 21-34, 2006.

[13] L. C. Freeman. A set of measures of centrality based on betweenness. Sociometry, 40:35-41, 1977.

[14] J. M. Anthonisse. The rush in a directed graph. Technical Report BN 9/71, Stichting Mathematisch Centrum, Amsterdam, 1971.

[15] P. Holme. Congestion and centrality in traffic flow on complex networks. Advances in Complex Systems, 6:163, 2003.

[16] G. Yan, T. Zhou, B. Hu, Z.-Q. Fu, and B.-H. Wang. Efficient routing on complex networks. Phys. Rev. E, 73:046108, 2006.

[17] M. G. Everett and S. P. Borgatti. The centrality of groups and classes. Mathematical Sociology, 23(3):181-201, 1999.

[18] V. Yegneswaran, P. Barford, and S. Jha. Global intrusion detection in the domino overlay system. In NDSS, 2004.

[19] K. Park. Scalable protection against ddos and worm attacks. DARPA ATO FTN project AFRL contract F30602-01-2-0530, Purdue universrty, WEST LAFAYETTE , IN 4 7 9 0 7, 2004.

[20] R. G. Downey and M. R. Fellows. Parametrized computational feasibility. Feasible Mathematics, 2:219-244, 1995.

[21] R. Puzis, Y. Elovici, and S. Dolev. Fast algorithm for successive group betweenness centrality computation. Technical Report #03-07, Dept. of Computer Science, Ben Gurion University of the Negev, Jan 2007.

[22] R. E. Korf and W. Zhang. Performance of linear-space search algorithms. Artificial Intelligence, 79:293-326, 1995.
[23] M. E. J. Newman. Scientific collaboration networks ii. shortest paths, weighted networks, and centrality. Phys. Rev. E, 64(016132), 2001.
[24] M. E. J. Newman. Phys. Rev. E, 73:039906(E), 2006.
[25] U. Brandes. A faster algorithm for betweenness centrality. Mathematical Sociology, 25(2):163-177, 2001.
[26] D. H. Zanette and M. Kuperman. http://www.citebase.org/cgi-bin/citations?id=oai:arXiv.org:cond-mat/0109273, 2001.

**Claims**

1. A searching method for finding the most influential group of vertices in a graph representing a data communication network, wherein vertices are routers connected to each other through communication lines, wherein the most influential group is a group of vertices that can inspect or modify most of the information flow in the data communication network; and wherein a Distributed Network Intrusion Detection System is deployed and monitors the traffic of the most influential group, the method being **characterized by** locating the group of vertices in the graph having the maximal Group Betweenness Centrality, GBC, the method comprising searching iteratively a decision tree for said group, wherein:

   a. each node C in said decision tree maintains one group of vertices, *GM(C),* and an ordered list of candidate vertices, CL(C), each of which may be added to *GM(C)* during said searching method; and
   b. said most influential group comprises k vertices, wherein k is a predetermined value;

   wherein at every node C the next best candidate vertex v $\in$ CL(C), determined according to the contribution of said vertex to the GBC of GM(C), is added to GM(C) until GM(C) contains k vertices.

2. The searching method of claim 1, wherein the decision tree is searched by a Depth First Branch and Bound (DFBnB) process by using:

   a. a first heuristic function, for determining the optimal order of the candidate vertices in *CL(C)* wherein, once determined, the most influential vertex is first in *CL(C);* and
   b. a second heuristic function, for estimating the maximal gain in GBC that can be acquired during the exploration of the sub-tree rooted at node C,

   wherein said decision tree is pruned according to said second heuristic function.

3. The searching method of claim 2, wherein the optimal order of *CL(C)* is determined according to:

   a. the individual Betweenness Centrality, BC, of each vertex in *CL(C),* wherein the first vertex in *CL(C)* has the highest BC and wherein *CL(C)* is ordered only once during said search process; or
   b. the contribution of each vertex in *CL(C)* to the BC of *GM(C),* wherein the first vertex in *CL(C)* has the highest contribution to the BC of *GM(C),* and wherein the order of the vertices in *CL(C)* is recalculated each time the members of *GM(C)* change.

4. The searching method of claim 2, wherein the second heuristic function is selected from the group:

   a.

$$h_1(C) = BC(c_1) * (k - |GM(C)|);$$

   b.

$$h_2(C) = \sum_{i=1}^{k-|GM(C)|} BC(c_i);$$

c.

$$h_3(C) = BC^{GM(C)}(c_1) * (k - |GM(C)|);$$

or
d.

$$h_4(C) = \sum_{i=1}^{|GM(C)|} BC^{GM(C)}(c_i);$$

wherein $c_i$ is the vertex at position i in CL(C), BC($c_i$) is the individual Betweenness Centrality, BC, of $c_i$ when CL(C) is ordered according to the individual BC of each vertex, and $BC^{GM(C)}(c_i)$ is the contribution of $c_i$ to GBC(GM(C)) when CL(C) is ordered according to the contribution of each vertex in CL(C) to the GBC of GM(C).

**Patentansprüche**

1. Suchverfahren zum Ermitteln der einflussreichsten Gruppe von Knoten in einem Graphen, der ein Datenkommunikationsnetzwerk darstellt, wobei die Knoten Router sind, die durch Kommunikationsleitungen miteinander verbunden sind,
   wobei die einflussreichste Gruppe eine Gruppe von Knoten ist, die einen Großteil des Informationsflusses in dem Datenkommunikationsnetzwerk überprüfen und modifizieren kann; und
   wobei ein verteiltes Netzwerkeindringungserkennungssystem (Distributed Network Intrusion Detection System) eingesetzt wird und den Verkehr der einflussreichsten Gruppe überwacht,
   wobei das Verfahren **dadurch gekennzeichnet ist, dass**
   durch Lokalisieren der Gruppe von Knoten in dem Graphen mit der maximalen Group Betweenness Centrality, GBC, das Verfahren ein iteratives Durchsuchen eines Entscheidungsbaums für die Gruppe aufweist, wobei:

   a. jeder Knoten C im Entscheidungsbaum eine Gruppe von Knoten, *GM(C),* und eine geordnete Liste von Kandidatenknoten, CL(C), unterhält, welche während des Suchverfahrens jeweils zur *GM(C)* hinzugefügt werden können; und
   b. die einflussreichste Gruppe k Knoten aufweist, wobei *k* ein vorgegebener Wert ist;

   wobei an jedem Knoten C der nächstbeste Kandidatenknoten v ∈ CL(C), der gemäß dem Beitrag des Knotens zur GBC der GM(C) bestimmt wird, zur GM(C) hinzugefügt wird, bis die GM(C) k Knoten enthält.

2. Suchverfahren nach Anspruch 1, wobei der Entscheidungsbaum durch einen Depth-First-Branchand-Bound (DFBnB)-Prozess durch Verwenden von Folgendem durchsucht wird:

   a. einer ersten heuristischen Funktion zum Bestimmen der optimalen Reihenfolge der Kandidatenknoten in der *CL(C),* wobei der einflussreichste Knoten, sobald bestimmt, in der *CL(C)* als erster steht; und
   b. einer zweiten heuristischen Funktion zum Schätzen des maximalen Zugewinns in der GBC, der während der Erkundung des Teilbaums erfasst wird, der am Knoten C verwurzelt ist,

   wobei der Entscheidungsbaum gemäß der zweiten heuristischen Funktion beschnitten wird.

3. Suchverfahren nach Anspruch 2, wobei die optimale Reihenfolge der *CL(C)* bestimmt wird gemäß:

a. der individuellen Betweenness Centrality, BC, von jedem Knoten in der *CL(C)*, wobei der erste Knoten in der *CL(C)* die höchste BC aufweist, und wobei die *CL(C)* während des Suchprozesses nur einmal geordnet wird; oder

b. dem Beitrag jedes Knotens in der *CL(C)* zur BC der *GM(C)*, wobei der erste Knoten in der *CL(C)* den höchsten Beitrag zur BC der *GM(C)* aufweist, und

wobei die Reihenfolge der Knoten in der *CL(C)* bei jeder Änderung der Mitglieder der *GM(C)* neu berechnet wird.

4. Suchverfahren nach Anspruch 2, wobei die zweite heuristische Funktion aus der folgenden Gruppe ausgewählt wird:

a.

$$h_1(C) = BC(c_1) * (k - |GM(C)|);$$

b.

$$h_2(C) = \sum_{i=1}^{k-|GM(C)|} BC(c_i);$$

c.

$$h_3(C) = BC^{GM(C)}(c_1) * (k - |GM(C)|);$$

oder
d.

$$h_4(C) = \sum_{i=1}^{|GM(C)|} BC^{GM(C)}(c_i);$$

wobei $c_i$ der Knoten an der Position i in der CL(C) ist, $BC(c_i)$ die individuelle Betweenness Centrality, BC, von $c_i$ ist, wenn die CL(C) gemäß der individuellen BC jedes Knotens geordnet ist, und $BC^{GM(C)}(c_i)$ der Beitrag von $c_i$ zur GBC (GM(C)) ist, wenn die CL(C) gemäß dem Beitrag jedes Knotens in der CL(C) zur GBC der GM(C) geordnet ist.

## Revendications

1. Procédé de recherche pour trouver le groupe le plus influent de sommets dans un graphique représentant un réseau de communication de données, dans lequel des sommets sont des routeurs mutuellement reliés à travers des lignes de communication, dans lequel le groupe le plus influent est un groupe de sommets qui peut inspecter ou modifier la majorité du flux d'informations dans le réseau de communication de données, et
dans lequel un système de détection d'intrusion de réseau distribué est déployé et surveille le trafic du groupe le plus influent, le procédé étant **caractérisé par** la localisation du groupe de sommets dans le graphique ayant la centralité intermédiaire de groupe maximal, GBC, le procédé comprenant de rechercher de manière itérative un arbre de décision pour ledit groupe, dans lequel :

a. chaque noeud C dans ledit arbre de décision conserve un groupe de sommets, GM(C), et une liste ordonnée de sommets candidats, CL(C), chacun d'eux pouvant être ajouté à GM(C) pendant ledit procédé de recherche, et
b. ledit groupe le plus influent comprend k sommets, où k est une valeur prédéterminée,

dans lequel à chaque noeud C le meilleur sommet candidats suivant $v \in$ CL(C), déterminé conformément à la contribution dudit sommet à la centralité GBC de GM(C), est ajouté à GM(C) jusqu'à ce que GM(C) contienne k sommets.

2. Procédé de recherche selon la revendication 1, dans lequel l'arbre de décision est recherché par un processus DFBnB (Depth First Branch and Bound) en utilisant :

a. une première fonction heuristique, pour déterminer l'ordre optimal des sommets candidats dans CL(C) où, une fois déterminé, le sommet le plus influent est en premier dans CL(C), et
b. une seconde fonction heuristique, pour estimer le gain maximal dans GBC qui peut être acquis pendant l'exploration de la sous-arborescence enracinée au noeud C, dans lequel ledit arbre de décision est taillé conformément à ladite seconde fonction heuristique.

3. Procédé de recherche selon la revendication 2, dans lequel l'ordre optimal de CL(C) est déterminé conformément à :

a. la centralité intermédiaire individuelle, BC, de chaque sommet dans CL(C), dans lequel le premier sommet dans CL(C) a la centralité BC la plus élevée et dans lequel CL(C) est ordonnée uniquement une fois pendant ledit processus de recherche, ou
b. la contribution de chaque sommet dans CL(C) à la centralité BC de GM(C), où le premier sommet dans CL(C) a la contribution la plus élevée à la centralité BC de GM(C), et dans lequel l'ordre des sommets dans CL(C) est recalculé à chaque fois que les éléments de GM(C) changent.

4. Procédé de recherche selon la revendication 2, dans lequel la seconde fonction heuristique est sélectionnée à partir du groupe :

a.

$$h_1(C) = BC(c_1) * (k - |GM(C)|);$$

b.

$$h_2(C) = \sum_{i=1}^{k-|GM(C)|} BC(c_i);$$

c.

$$h_3(C) = BC^{GM(C)}(c_1) * (k - |GM(C)|);$$

or
d.

$$h_4(C) = \sum_{i=1}^{|GM(C)|} BC^{GM(C)}(c_i);$$

Dans lequel $c_i$ est le sommet à la position i dans CL(C), $BC(c_i)$ est la centralité intermédiaire individuelle, BC, de $c_i$ lorsque CL(C) est ordonnée conformément à la centralité BC individuelle de chaque sommet, et $BC^{GM(C)}(c_i)$ est la contribution de $c_i$ à GBC(GM(C)) lorsque CL(C) est ordonnée conformément à la contribution de chaque sommet dans CL(C) à la centralité GBC de GM(C).

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040267584 A1
- US 20060075335 A1

**Non-patent literature cited in the description**

- **P.A. GLOOR ; R. LAUBACHER ; S.B.C. DYNES ; Y. ZHAO.** Visualiziation of communication patterns in collaborative innovation networks. *CIKM '03: Proceedings of the twelfth international conference on information and knowledge management,* 02 November 2003, 56-60
- **S. H. STROGATZ.** Exploring complex networks. *Nature,* March 2001, vol. 410, 268-276
- **S. WASSERMAN ; K. FAUST.** Social network analysis: Methods and applications. Cambridge University Press, 1994
- **J. SCOTT.** Social Network Analysis: A Handbook. Sage Publications, 2000
- **P. BORK ; L. J. JENSEN ; C. VON MERING ; A. K. RAMANI ; I. LEE ; E. M. MARCOTTE.** Protein interaction networks from yeast to human. *Curr. Opin. Struct. Biol.,* June 2004, vol. 14 (3), 292-299
- **M. FALOUTSOS ; P. FALOUTSOS ; C. FALOUTSOS.** On power-law relationships of the internet topology. *SIGCOMM Comput. Comm. Rev.,* 1999, vol. 29 (4), 251-262
- **S.-H. YOOK ; H. JEONG ; A.-L. BARABASI.** Modeling the internet's large-scale topology. *Proceedings of the National Academy of Science,* October 2002, vol. 99, 13382-13386
- **A.-L. BARABASI ; R. ALBERT.** Emergence of scaling in random networks. *Science,* 1999, vol. 286, 509-512
- **A.-L. BARABASI ; R. ALBERT ; H. JEONG.** Scale-free characteristics of random networks: the topology of the world-wide web. *Physica A,* 2000, vol. 281, 69-77
- **B. BOLLOBAS ; O. RIORDAN.** Robustness and vulnerability of scale-free random graphs. *Internet Mathematics,* 2003, vol. 1, 1-35
- **M. BARTHÉLEMY.** Betweenness centrality in large complex networks. *The European Physical Journal B - Condensed Matter,* March 2004, vol. 38 (2), 163-168
- **C. BALLESTER ; A. CALVA -ARMENGOL ; Y. ZENOU.** Who's who in networks. wanted: The key player. *CEPR Discussion Papers 5329, C.E.P.R. Discussion Papers,* October 2005, http://ideas.repec.org/p/cpr/ceprdp/5329.html.
- **STEPHEN P. BORGATTI.** Identifying sets of key players in a social network. *Comput. Math. Organ. Theory,* 2006, vol. 12 (1), 21-34
- **L. C. FREEMAN.** A set of measures of centrality based on betweenness. *Sociometry,* 1977, vol. 40, 35-41
- **J. M. ANTHONISSE.** The rush in a directed graph. *Technical Report BN 9/71, Stichting Mathematisch Centrum, Amsterdam,* 1971
- **P. HOLME.** Congestion and centrality in traffic flow on complex networks. *Advances in Complex Systems,* 2003, vol. 6, 163
- **G. YAN ; T. ZHOU ; B. HU ; Z.-Q. FU ; B.-H. WANG.** Efficient routing on complex networks. *Phys. Rev. E,* 2006, vol. 73, 046108
- **M. G. EVERETT ; S. P. BORGATTI.** The centrality of groups and classes. *Mathematical Sociology,* 1999, vol. 23 (3), 181-201
- **V. YEGNESWARAN ; P. BARFORD ; S. JHA.** Global intrusion detection in the domino overlay system. *NDSS,* 2004
- **K. PARK.** Scalable protection against ddos and worm attacks. *DARPA ATO FTN project AFRL contract F30602-01-2-0530,* 2004, 4-7 9 0 7
- **R. G. DOWNEY ; M. R. FELLOWS.** Parametrized computational feasibility. *Feasible Mathematics,* 1995, vol. 2, 219-244
- **R. PUZIS ; Y. ELOVICI ; S. DOLEV.** Fast algorithm for successive group betweenness centrality computation. *Technical Report #03-07, Dept. of Computer Science, Ben Gurion University of the Negev,* January 2007
- **R. E. KORF ; W. ZHANG.** Performance of linear-space search algorithms. *Artificial Intelligence,* 1995, vol. 79, 293-326
- **M. E. J. NEWMAN.** Scientific collaboration networks ii. shortest paths, weighted networks, and centrality. *Phys. Rev. E,* 2001, vol. 64, 016132
- **M. E. J. NEWMAN.** *Phys. Rev. E,* 2006, vol. 73 (E), 039906
- **U. BRANDES.** A faster algorithm for betweenness centrality. *Mathematical Sociology,* 2001, vol. 25 (2), 163-177